# EUROPEAN PATENT APPLICATION

(11) **EP 4 759 603 A1**
(43) Date of publication of application: **17.06.2026**
(21) Application number: 24218976.9
(22) Date of filing: 11.12.2024
(51) Int. Cl.: B60L 1/00

(54) **CONCEPT FOR A BATTERY ELECTRIC VEHICLE WITH A HIGH VOLTAGE BACKUP BATTERY**

(71) Applicant: Aptiv Technologies AG, 8200 Schaffhausen (CH)
(72) Inventor: BORNEMANN, Martin, 8200 Schaffhausen (CH); SVENSSON, Magnus, 8200 Schaffhausen (CH); WELSCH, Tim, 8200 Schaffhausen (CH)
(74) Representative: Bardehle Pagenberg Partnerschaft mbB Patentanwälte Rechtsanwälte

(57) **Abstract**

A high voltage battery system for an electric vehicle, the high voltage battery system comprises a main battery section comprising a high voltage main traction battery and a main electrical circuit, configured to supply the electric vehicle traction in drive mode; and a backup battery section, comprising a high voltage backup battery and a backup electrical circuit, configured to supply the electric low voltage vehicle systems in standby mode and comprising a backup battery DC/DC converter to supply low voltage vehicle systems in drive mode and in standby mode, wherein the backup battery is configured to provide enough power to drive the vehicle in an emergency drive mode. An electric vehicle comprising such a high voltage battery system.

## Description

### 1. Field of the invention

This invention relates to a high voltage battery system for an electric vehicle and an electric vehicle.

### 2. Background

Electric vehicles (EVs) depend on high-voltage battery systems to supply power for propulsion, auxiliary functions, and electronic control systems. Traditionally, EVs use a main high-voltage traction battery for driving and a separate low-voltage backup battery (typically 12-60 V) for powering auxiliary functions, for instance when the vehicle is in standby mode. Yet the high-voltage (HV) battery is not exclusively utilized for traction purposes. During driving, auxiliary low-voltage (LV) functions are typically powered by HV battery cells, and the low-voltage backup battery is simultaneously charged. In the event of a malfunction or increased power demand on the LV side, the backup battery assumes the role of supplying power to the auxiliary functions. This multi-battery setup, however, presents several challenges. Managing two different battery systems adds weight, complexity, and maintenance demands to the vehicle. Additionally, there are challenges in maintaining efficient power flow between high-voltage and low-voltage components without substantial energy loss.

Another common problem arises in ensuring that standby and necessary auxiliary functions can remain operational, even if the main traction battery is temporarily unable to provide power for instance due to a defect or discharge. Conventional EV battery systems may struggle with limited emergency power for propulsion, lack of efficient recharging options between battery sections, increased standby energy consumption due to always-connected modes and increased reliance on external charging sources, all of which limit the operational reliability of the vehicle.

In view of the foregoing, there is a need for an improved battery system. It is thus an object of the present invention to overcome some or all the deficiencies of the prior art.

### 3. Summary

The above objects are at least partially achieved by the subject matter of independent claim **1.** Preferred embodiments are the subject of the dependent claims, and the skilled person will find clues to other suitable aspects of the present invention in the overall disclosure of the present application.

An aspect of the invention relates to a high voltage battery system for an electric vehicle, the battery system comprising: a main battery section comprising a high voltage main traction battery and a main electrical circuit, configured to supply the electric vehicle traction in drive mode, and optionally comprising a DC/DC converter to supply the low voltage vehicle systems; and a backup battery section, comprising a high voltage backup battery and a backup electrical circuit, configured to supply the electric vehicle traction in emergency drive mode, and comprising a DC/DC converter, configured to supply the low voltage vehicle systems in driving mode as backup path and also to supply the low voltage vehicle systems in standby mode wherein the backup battery is configured to provide enough power to drive the vehicle in an emergency drive mode. Preferably, the electric vehicle does not comprise a low voltage backup battery with a battery voltage of less than 60 Volts.

As used herein, low voltage vehicle systems are systems with a voltage requirement of less than 60 Volts, in contrast to e.g., the vehicle traction system that require much higher voltages.

The first section, referred to as the main battery section, includes a high-voltage traction battery and a main electrical circuit. This section provides power to the vehicle during its active or "drive" mode. The second section, known as the backup battery section, features a separate high-voltage backup battery and backup electrical circuit. This section is designed to supply power to the vehicle when it is in "standby" mode, ensuring continuous functionality even when the main battery is not engaged. With such a high voltage battery system, such a dual-battery design enhances the vehicle's reliability by maintaining power availability for necessary systems while in standby mode. For instance, the backup battery section could support low-energy functions such as security systems, diagnostics, and communication interfaces without relying on the primary traction battery, which conserves the main battery's power for driving purposes. This configuration offers advantages, including increased energy efficiency, prolonged main battery life, and improved vehicle performance by segregating high-power and low-power demands across two separate battery electrical circuits. Such a backup battery is designed with a capacity and power output sufficient to move the vehicle over a short distance or at reduced speeds. For example, at least 30 km at a speed of 80 km/h, preferably at least 50 km at a speed of 80 km/h. This feature is especially valuable in scenarios where the main traction battery is discharged or temporarily non-functional, allowing the vehicle to be driven to a safer location or charging station. By enabling the backup battery to serve as a secondary propulsion source, the system enhances vehicle safety, reliability, and user convenience, offering a practical solution for unexpected power issues in the main battery. This might be realized by the energy transfer from the backup battery to the main electrical circuit via a dedicated hardware connection, and/or supplying energy to a separate motor inverter, and/or utilizing a secondary backup input of the primary motor inverter. This configuration ensures greater independence for drivers. The absence of a dedicated low-voltage backup battery simplifies the vehicle's electrical system, reducing weight, complexity, and manufacturing costs. The high-voltage backup battery, possibly in combination with a low-voltage converter, supplies power directly to low-voltage systems. This design choice enhances energy efficiency by combining power sources, as it eliminates the need to manage and maintain a separate low-voltage battery. Additionally, this configuration can improve the overall reliability of the vehicle by centralizing battery management within a single high-voltage system.

This can be improved when the main electrical circuit and the backup electrical circuit are electrically coupled (directly or indirectly) by a DC/DC charger.

Such a DC/DC charger can enable the backup battery to be recharged by the main battery when the vehicle is in drive mode or the vehicle is in charging mode connected to an electrical charging station.

This can be further improved, when the backup battery can be charged by the main battery, and preferably when the backup battery can only be charged by the main battery.

Such a configuration can ensure a controlled and predictable charging process, wherein energy flows (preferably solely) from the main battery to the backup battery, for instance facilitated by the DC/DC charger discussed in the previous paragraph. Such a configuration can ensure that the backup battery does not necessarily depend on external charging sources, thus simplifying architecture of the system and enhancing reliability. By limiting the charging source to the main battery, the system reduces the complexity of managing multiple charging inputs and can ensure that the backup battery is only recharged during optimal conditions, such as when the vehicle is in drive mode or is during charging at a charging-station. This setup can improve system durability and maintain the integrity of both batteries.

The capacity of a traditional low voltage (LV) backup battery is in the range of 300 to 1000 Wh, and suffers providing the vehicle's standby consumption over weeks. Further improvement can be achieved when the capacity of the backup battery is in the range 2 to 25 kWh, preferably 3 to 15 kWh, most preferably in the range 4 to 12 kWh.

Such a specified capacity range allows the backup battery to effectively support the vehicle's standby mode without being oversized, which could lead to unnecessary weight and cost. A backup battery with a capacity in the range of 4 to 12 kWh is e.g., sufficient to maintain necessary low-energy vehicle functions, such as communication systems, monitoring devices, and security features, when the vehicle is in standby mode. This capacity range strikes a balance between power availability, costs and weight efficiency, ensuring that the overall performance and range of the vehicle are minimally affected by the backup system. Additionally, this capacity contributes to cost savings and simplifies energy management between the main and backup batteries.

Further improvement can be achieved when the main traction battery and the high voltage backup battery share the same battery housing.

Housing both the main traction battery and the high-voltage backup battery within the same enclosure reduces the system's overall footprint, conserving valuable space within the vehicle chassis. This shared housing also enhances thermal management efficiency by allowing the cooling and heating systems to regulate both batteries simultaneously. Additionally, it minimizes the weight and material requirements for separate enclosures, contributing to reduced manufacturing costs and improved vehicle efficiency. By co-locating the batteries, the system achieves better mechanical robustness and simplifies maintenance procedures, as both batteries can be accessed and serviced from a single location.

Further improvement can be achieved when the main battery section does not comprise a DCDC converter to supply low voltage vehicle systems.

Eliminating the DC/DC converter from the main battery section reduces the complexity, cost, and weight of the main traction battery system. By delegating the supply of low-voltage vehicle systems (such as control units, lighting, infotainment systems and the like) to the backup battery section, the design simplifies the primary high-voltage system, ensuring that the main battery's energy is dedicated to propulsion. This approach enhances energy efficiency and optimizes the performance of the main battery during drive mode. Additionally, the separation of responsibilities between the two battery sections can ensure more reliable power management.

Further improvement is achieved when the backup battery comprises a 110 V, 120 V, 220 V and/or 230 V(AC) plug, preferably a Vehicle-to-Load plug.

Such a plug could provide users with a convenient power source for camping, tailgating, or emergency situations, where external electrical devices may need to be powered. The inclusion of a camping plug, which typically adheres to standard outdoor and rugged-use specifications, enhances the practicality of the system for recreational and off-grid scenarios. Such a design leverages the backup battery's capacity to function beyond the vehicle's operational requirements, offering additional utility without compromising the system's primary roles of supporting standby functions and emergency propulsion.

Further improvement can be achieved when the backup battery section comprises a low voltage converter, dedicated to supply low voltage less than 60 V, preferably in the range of 12 to 60 V, more preferably in the range 30 to 60 V, most preferably in the range 42 to 52 V, dedicated to supply low voltage units of the electrical vehicle.

A low-voltage converter within the mentioned ranges effectively manages the power distribution to various low-voltage systems without relying on the high-voltage main battery section, which conserves energy for driving purposes. This setup allows the backup battery to take on the responsibility for low-energy systems, reducing the load on the main battery and enhancing the vehicle's energy efficiency. Additionally, by using a dedicated low-voltage converter, the design ensures stable voltage levels for sensitive vehicle electronics, improving system safety and reliability while simplifying the overall electrical architecture of the vehicle.

Further improvement can be achieved when the backup battery section comprises a plurality of supercapacitors.

Supercapacitors are energy storage devices known for their rapid charge and discharge capabilities, high power density, and long cycle life, making them suitable for applications that require frequent power bursts or fast energy recovery. Integrating supercapacitors into the backup battery section can enable the system to efficiently handle sudden, short-term power demands when the vehicle is in standby mode. The supercapacitors can quickly supply power to low-voltage units, such as sensors, communication modules, and electronic control systems, without heavily drawing on the backup battery. Additionally, the ability of supercapacitors to withstand a high number of cycles with minimal degradation makes them ideal for supporting frequent auxiliary functions.

Further improvement can be achieved when the ratio between the high voltage main traction battery voltage (HVMTBV) and the high voltage backup battery voltage (HVBBV) HVMTBV/HVBBV is in the range 1 to 2, preferably in the range 1,2 to 1,8, more preferably in the range 1,4 to 1,6 and most preferably 1,5.

A HVMTB/HVBB voltage ratio of 1.5 could for example mean that in a State of Charge of 100%, the high voltage main traction battery voltage (HVMTBV) would for instance be 600 V with the high voltage backup battery voltage (HVBBV) being consequently 400 V. Maintaining the HVMTB/HVBB voltage ratio close to 1.5 allows the DC/DC charger between the main and backup electrical circuits to operate with high efficiency, facilitating smooth energy transfer from the main battery to the backup battery when needed. Such a balanced voltage ratio can support stable charging conditions and minimizes energy losses. Such a configuration improves the overall efficiency and stability of the battery system.

Further improvement is achieved when the high voltage backup battery voltage at 100% State of Charge is equal or smaller than the high voltage main traction battery voltage at 0% State of Charge, preferably 10% State of Charge. By having the voltage of the backup battery (always) lower than the voltage of the main traction battery, the charging of the backup battery is facilitated.

By ensuring that the fully charged HVBB voltage is lower than the HVMTB voltage at even low charge levels, the system enables a natural and consistent energy flow from the main battery to the backup battery. This voltage difference allows the DC/DC converter to perform the charging process with minimal energy loss, maximizing the backup battery's recharge efficiency without needing complex charging controls. Such a configuration enables the use of a cost-effective step-down DC-DC converter, while the charging control remains unchanged. This approach improves the reliability of the charge of the backup battery, as it can be recharged even when the main battery is not fully charged, ensuring that the backup battery remains available to support standby functions.

Further improvement is achieved when the battery voltage of the high voltage main traction battery and/or of the high voltage backup battery exceeds 120 V, more preferably 200 V, even more preferably 300 V and even more preferably 400 V.

E.g., setting the HVMTB voltage at or above 400 V can enable efficient power delivery to the vehicle's propulsion system, supporting high-performance drive modes with reduced current requirements, which minimizes heat generation and energy losses. For the HVBB, maintaining a voltage level at or above e.g., 200 V can ensure that it can effectively power standby functions and supply energy to low-voltage systems when needed, without importantly drawing down the main battery. The skilled person knows that in this context, the term battery voltage means the battery voltage at a stage of charge of 100% under normal conditions.

Further improvement is achieved when the backup battery section comprises two DC/DC converters to supply low voltage vehicle systems.

Including two DC/DC converters in the backup battery section can ensure redundancy and load distribution for low-voltage power supply. This configuration enhances system reliability by providing a backup in case one converter fails, thereby maintaining uninterrupted power to essential low-voltage systems such as electronic control units for steering and braking or exterior lighting.

Another aspect of the invention is an electric vehicle comprising a battery system according to any one of the preceding claims.

The main traction battery powers the vehicle during driving, while the backup battery could support necessary functions when the vehicle is in standby, conserving the main battery's charge for driving purposes. A preferred option is that the high-voltage main traction battery (HV MTB) supplies all loads, while the backup battery is maintained at a 100% state of charge (SoC) to serve as a reserve for standby periods or emergency situations. These configurations can enhance the vehicle's energy efficiency, extends driving range, and improves reliability by ensuring continuous power for important systems, such as diagnostics and security, even when the vehicle is stationary.

This embodiment can be further improved when the high voltage backup battery comprises a boosting means, adapted to supply the main electrical circuit with additional power in a boosted drive mode.

Such a boosting means enables the backup battery to complement the main traction battery by providing supplementary energy during scenarios such as rapid acceleration, steep inclines, or towing heavy loads. This arrangement allows the vehicle to temporarily access increased power levels beyond what the main traction battery alone can provide, improving its dynamic capabilities. The boosting means may include specialized circuitry or controls that ensure the backup battery can integrate seamlessly with the main electrical circuit, or the main traction-inverter unit alternatively, by e.g. using a separate backup power connection, delivering power efficiently and safely during high-demand conditions. The implementation of drive-boosting may be achieved through various configurations. For example, it could involve supplying the main high-voltage (HV) circuit or rail directly, or alternatively, providing energy to the motor inverter via a dedicated backup path. This feature not only enhances vehicle performance but also distributes energy demand between the two batteries, potentially reducing strain on the main traction battery and extending its lifespan.

### 4. Brief description of the figures

In the following, preferred embodiments of the disclosure are disclosed by reference to the accompanying figures.

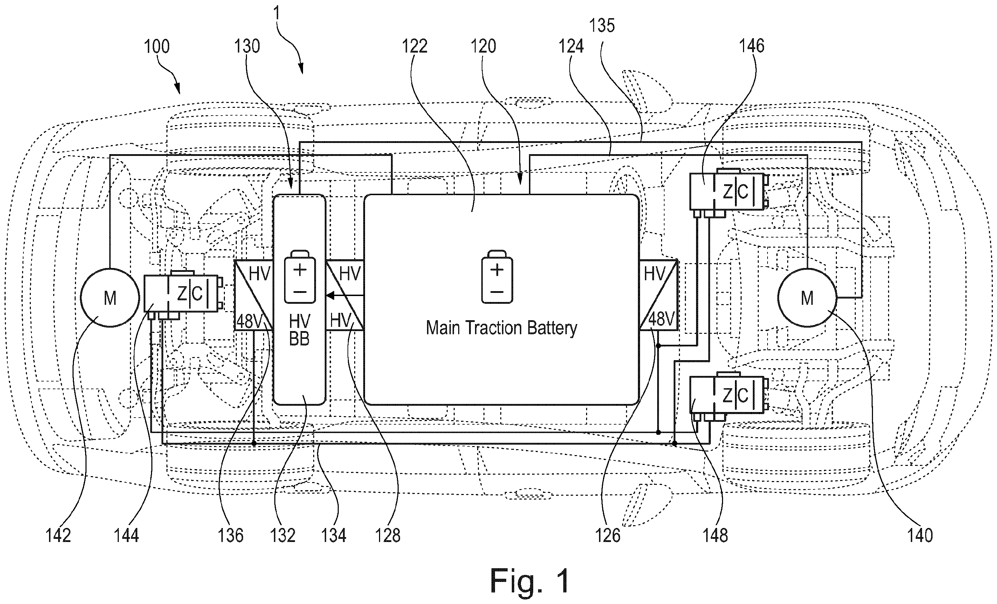

Fig. 1: illustrates a high voltage battery system according to the invention in a schematic view.

### 5. Detailed description of the figures

The subsequent sections provide a detailed description of the invention, referencing the accompanying illustrations for clarity. The descriptions represent examples only and are not intended to limit the invention's scope. Identical reference numerals across the figures and text denote the same components. The illustrations may not reflect actual size or scale; their dimensions, proportions, and depictions of elements might be enhanced for better understanding and visual convenience.

Figure 1 illustrates a high voltage battery system 100 according to the invention in a schematic view. The electrical vehicle 1 comprises a high voltage battery system 100, which has a main battery section 120 comprising a high voltage main traction battery 122 and a main electrical circuit 124, configured to supply the electric vehicle 1 in drive mode and a backup battery section 130, comprising a high voltage backup battery 132 and a backup electrical circuit 134, configured to supply the electric vehicle 1 in standby mode. The main battery section 120 comprises a HV/LV converter 126 to supply zonal electronic control units in form of the rear zonal computer 144, the front left zonal computer 146 and the front right zonal computer 148. The battery concept is equally applicable to non-zonal architectures. To ensure broad applicability, no limitations should be imposed in this regard. The main battery section 120 also directly supplies the front motor 140 and the rear motor 142 with high voltage. The backup battery section 130 comprises a HV/LV converter 136 to additionally supply zonal electronic control units in form of the rear zonal computer 144, the front left zonal computer 146 and the front right zonal computer 148. The backup battery section 130 can also directly supply the front motor 140 with high voltage, for example if the main traction battery has a defect. The DC/DC (HV/HV) converter 128 functions as a charger for the backup battery 132 and is arranged between the main battery section 120 and the backup battery section 130. This way, the main electrical circuit 124 and the backup electrical circuit 134 are separated by the DC/DC (HV/HV) converter 128. The backup battery 132 is also configured to provide enough power to drive the vehicle by supplying the front motor 140. As shown in the schematic, the electric vehicle 1 does not comprise a low voltage backup battery, such as a battery with a battery voltage in the range of 12 to 100 V.

The main battery section 120 features a high-voltage main traction battery 122 connected to a main electrical circuit 124, responsible for supplying power to the vehicle's drive systems in drive mode. This section powers high-voltage components directly, such as the front motor 140 and rear motor 142, enabling propulsion. Additionally, the main battery section 120 includes a high-voltage/low-voltage (HV/LV) DC/DC converter 126, which regulates and supplies appropriate low-voltage power to zonal electronic control units throughout the vehicle like the rear zonal computer 144, front left zonal computer 146, and front right zonal computer 148. The backup battery section 130 is equipped with a high-voltage backup battery 132 and a backup electrical circuit 134, dedicated to powering the vehicle in standby mode. This section also includes its own HV/LV converter 136, allowing it to supply low-voltage power to the zonal control units. Importantly, in the event of a malfunction or discharge in the main traction battery, the backup battery section 130 can directly power the front motor 140 utilizing HV backup electrical circuit (power rail) 135, ensuring limited drive capability to move the vehicle if needed. A DC/DC HV/HV converter 128 is positioned between the main battery section 120 and the backup battery section 130, acting as a charging interface for the backup battery 132 and creating a separation between the main HV electrical circuit 124 and the backup HV electrical circuit 135. This configuration enables the main battery to recharge the backup battery efficiently while keeping the circuits separated. The vehicle 1 does not include a separate low-voltage backup battery in the 12 to 100 V range. Instead, the high-voltage backup battery 132, supported by the HV/LV converters, supplies all low-voltage needs, thus simplifying the architecture of the battery system and eliminating the need for a traditional low-voltage backup battery.

### Reference list:

1: electrical vehicle
100: high voltage battery system
120: main battery section
122: main traction battery
124: high voltage (HV) main electrical circuit
126: HV/LV DC/DC converter
128: HV/HV DC/DC converter
130: backup battery section
132: backup battery
134: low voltage backup electrical circuit
135: high voltage backup electrical circuit
136: HV/LV DC/DC converter
140: front motor
142: rear motor
144: rear zonal computer
146: front left zonal computer
148: front right computer

## Claims

1. A high voltage battery system (100) for an electric vehicle (1), the high voltage battery system (100) comprising:
A main battery section (120) comprising a high voltage main traction battery (122) and a main electrical circuit (124), configured to supply the electric vehicle (1) traction in drive mode;
and
A backup battery section (130), comprising a high voltage backup battery (132) and a backup electrical circuit, configured to supply the electric low voltage vehicle systems in standby mode and comprising a backup battery DC/DC converter (136) to supply low voltage vehicle systems in drive mode and in standby mode,
wherein the backup battery (132) is configured to provide enough power to drive the vehicle in an emergency drive mode.

2. The high voltage battery system (100) according to claim 1, wherein the main circuit (124) and the backup circuit (134) are electrically coupled by a DC/DC charger (128).

3. The high voltage battery system (100) according to any one of the preceding claims, wherein the backup battery (132) can be charged by the main traction battery, and wherein preferably the backup battery (132) can only be charged by the main traction battery.

4. The high voltage battery system (100) according to any one of the preceding claims, wherein the capacity of the backup battery (132) is in the range 2 to 25 kWh, preferably 3 to 15 kWh, most preferably in the range 4 to 12 kWh.

5. The high voltage battery system (100) according to any one of the preceding claims, wherein the main traction battery and the high voltage backup battery share the same battery housing.

6. The high voltage battery system (100) according to any one of the preceding claims, wherein the main traction battery section does not comprise a DC/DC converter to supply low voltage vehicle systems.

7. The high voltage battery system (100) according to any one of the preceding claims, wherein the backup battery comprises a 110 V, 120 V, 220 V and/or 230 V plug, preferably a Vehicle-to-Load plug.

8. The high voltage battery system (100) according to any one of the preceding claims, wherein the backup battery section (130) comprises a low voltage converter, dedicated to supply a low voltage of less than 60 V, preferably in the range of 12 to 60 V, more preferably in the range 30 to 60 V, most preferably in the range 42 to 52 V, dedicated to supply low voltage units of the electrical vehicle.

9. The high voltage battery system (100) according to any one of the preceding claims, wherein the backup battery section (130) comprises a plurality of supercapacitors.

10. The high voltage battery system (100) according to any one of the preceding claims, wherein the ratio between the high voltage main traction battery voltage (HVMTBV) and the high voltage backup battery voltage (HVBBV) HVMTBV/HVBBV is in the range 1 to 2, preferably in the range 1,2 to 1,8, more preferably in the range 1,4 to 1,6 and most preferably 1,5.

11. The high voltage battery system (100) according to any one of the preceding claims, wherein the high voltage backup battery voltage at 100% State of Charge is equal or smaller than the high voltage main traction battery voltage at 0% State of Charge, preferably 10% State of Charge.

12. The high voltage battery system (100) according to any one of the preceding claims, wherein the battery voltage of the high voltage main traction battery (122) and/or of the high voltage backup battery (132) exceeds 120 V, more preferably 200 V, even more preferably 300 V and even more preferably 400 V.

13. The high voltage battery system (100) according to any one of the preceding claims, wherein the backup battery section comprises two DC/DC converters to supply low voltage vehicle systems.

14. An electric vehicle (1) comprising a high voltage battery system (100) according to any one of the preceding claims.

15. An electric vehicle (1) comprising a high voltage battery system (100) according to any one of the preceding claims 1 to 13, wherein the high voltage backup battery comprises a boosting means, adapted to supply the main circuit with additional power in a boosted drive mode, or adapted to supply the vehicle drive unit directly with additional power in a boosted driving mode.
